# EUROPEAN PATENT SPECIFICATION

(11) **EP 3 571 955 B1**
(45) Date of publication and mention of the grant of the patent: **29.07.2026**
(21) Application number: 19174939.9
(22) Date of filing: 16.05.2019
(51) Int. Cl.: A46B 3/16, A46D 1/00

(54) **TOOTHBRUSH BRISTLE AND BRISTLE TUFT**
ZAHNBÜRSTENBORSTE UND BORSTENBÜSCHEL
POIL DE BROSSE À DENTS ET TOUFFE DE POILS

(30) Priority: 21.05.2018 US 201862674149 P
(43) Date of publication of application: 27.11.2019
(73) Proprietor: Sunstar Americas, Inc., Schaumburg, IL 60195 (US)
(72) Inventor: WATCHAROTONE, Supinda, Oak Park, IL 60302 (US); LEONCIO, Angel Gonzalez, Winfield, IL 60190 (US); SAITO, Toru, Buffalo Grove, IL 60089 (US)
(74) Representative: Barker Brettell LLP

(56) References cited:
- WO-A1-2004/080237
- US-A- 6 044 514

## Description

### BACKGROUND

### 1. Field of the Disclosure

The present disclosure relates generally to a bristle for a toothbrush. More specifically, the present disclosure relates to a bristle for a toothbrush that is tapered at both ends of the bristle, as well as an asymmetric ("J-hook") tufting arrangement therefor.

### 2. Description of Related Art

Toothbrushes generally include a plurality of bristles to remove dental plaque and clean teeth, including the gaps between neighboring teeth and the gaps between the teeth and gums. During one method of toothbrush manufacture, the bristles are shaped, grouped into bristle tufts, bent, and implanted in tuft holes of a head of the toothbrush by an anchor, such as a staple, which is located between the two ends of a bristle. Thus, both ends of each bristle extend away from the surface of the toothbrush head so as to clean teeth during use.

Existing toothbrushes often have difficulty penetrating the gaps between neighboring teeth (interproximal access) and the gaps between the teeth and gums (subgingival access), due at least in part to the bristle shape. Accordingly, there exists a need for an improved toothbrush bristle.

WO2004/080237 shows a toothbrush having needle-shaped bristles with various end points and a method of manufacturing the same. The needle-shaped toothbrush bristle, folded in an asymmetric U-shape to outwardly expose both ends thereof at a height difference ranging from 0.5 to 2 mm and disposed on a head portion of the toothbrush, has a tapered length of 3-7 mm and a blunt end point with a diameter of 0.01-0.07 mm. US 6 044 514 shows a toothbrush comprising a plurality of tufts each of which comprises a plurality of bristles embedded respectively in bored holes which are vertically and laterally formed in a head portion of the toothbrush. The tufts each comprise first and second bristles. The first bristles are tapered bristles and the second bristles have ball-shaped ends. The distal ends of the second bristles are located in a lower position than the distal ends of the first bristles.

### BRIEF SUMMARY OF THE DISCLOSURE

The invention is disclosed in the claims. Various aspects of the present disclosure relate to toothbrush bristles, toothbrushes, and methods of manufacturing the same.

In one exemplary aspect of the present disclosure, there is provided a toothbrush, comprising: a handle; a head connected to the handle; and a plurality of bristles, respective ones of the plurality of bristles including: a first end having a tapered first tip, a second end having a tapered second tip, and a substantially cylindrical shaft extending between the first end and the second end, wherein respective ones of the plurality of bristles are fastened to the head by a fastener at a fastening point along the shaft, the fastening point being located nearer to the second end than to the first end such that the first end extends from a surface of the head to a first height and the second end extends from the surface of the head to a second height, and wherein a difference between the first height and the second height is greater than or equal to 2.25 mm

In another exemplary aspect of the present disclosure, there is provided a method of manufacturing a toothbrush, comprising: providing a plurality of unshaped bristles, respective ones of the plurality of unshaped bristles having a first end, a second end, and a substantially cylindrical shaft between the first end and the second end; attaching respective ones of the plurality of unshaped bristles to a head of the toothbrush using a fastener at a fastening point along the shaft, the fastening point being located nearer to the second end than to the first end such that the first end extends from a surface of the head to a first height and the second end extends from the surface of the head to a second height; and shaping the first end of the respective ones of the plurality of unshaped bristles to provide a tapered first tip and the second end of the respective ones of the plurality of unshaped bristles to provide a tapered second tip, thereby to create a plurality of shaped bristles, wherein a difference between the first height and the second height is greater than or equal to 2.25 mm.

In another exemplary aspect of the present disclosure, there is provided a toothbrush comprising: a handle; a head connected to the handle; a plurality of first bristles, respective ones of the plurality of first bristles including: a first distal end having a tapered tip and extending from a surface of the head to a first height, a first proximal end fastened to the handle, and a substantially cylindrical first shaft extending between the first distal end and the first proximal end; and a plurality of second bristles, respective ones of the plurality of second bristles including: a second distal end having a tapered tip and extending from a surface of the head to a second height, a second proximal end fastened to the handle, and a substantially cylindrical second shaft extending between the second distal end and the second proximal end, wherein a difference between the first height and the second height is greater than or equal to 2.25 mm.

### DESCRIPTION OF THE DRAWINGS

Detailed and specific features of various embodiments of the present disclosure are more fully disclosed in the following description, reference being had to the accompanying drawings, in which:
FIG. 1 illustrates several views (a)-(b) of an exemplary toothbrush according to various aspects of the present disclosure;
FIG. 2 illustrates a bristle tuft arrangement for the exemplary bristle head of FIG. 1;
FIG. 3 illustrates several views (a)-(b) of another exemplary toothbrush according to various aspects of the present disclosure;
FIG. 4 illustrates several views (a)-(b) of another exemplary toothbrush according to various aspects of the present disclosure;
FIG. 5 illustrates a partial cross-sectional view of the above exemplary toothbrushes;
FIG. 6 illustrates a partial view of an exemplary bristle for use with various aspects of the present disclosure;
FIG. 7 illustrates an exemplary bristle arrangement for use with various aspects of the present disclosure; and
FIG. 8 illustrates another exemplary bristle arrangement for use with various aspects of the present disclosure.

### DETAILED DESCRIPTION

In the following description, numerous details are set forth. It will be readily apparent to one skilled in the art that these specific details are merely exemplary and not intended to limit the scope of this disclosure.

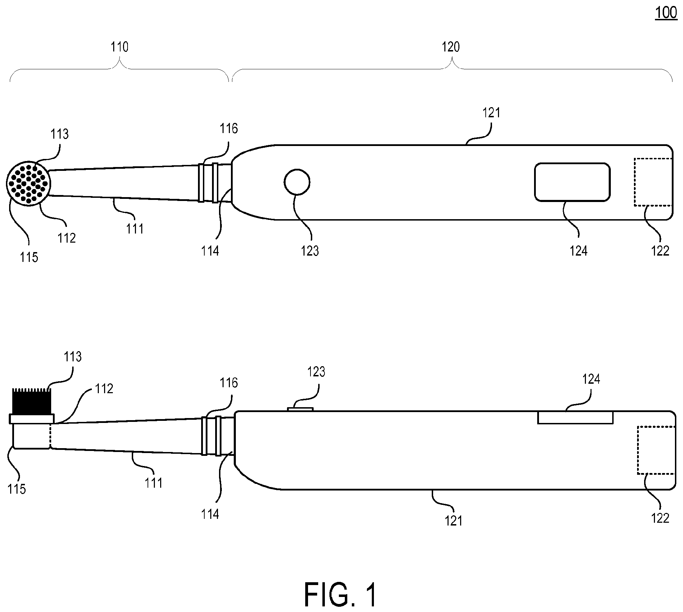

The bristles and bristle tufting arrangement according to the present disclosure may be implemented in any type of toothbrush, including but not limited to: power toothbrushes, including rechargeable, non-rechargeable, battery-operated, oscillating-rotating, rotating, oscillating, sonic vibrating, ultrasonic, and manual toothbrushes. FIGS. 1-5 illustrate various examples of toothbrushes that may utilize the bristles and bristle tufting arrangement.

FIG. 1 illustrates an exemplary toothbrush 100 according to various aspects of the present disclosure. More particularly, the toothbrush 100 is a rechargeable power toothbrush. The toothbrush 100 includes a bristle head section 110 and a body section 120 that are removably attached to one another. The bristle head section 110 comprises a transmission housing 111, an oscillatory rotating disk 112, and a plurality of bristle tufts 113. The transmission housing 111 extends longitudinally from a handle end 114 to a head end 115. The handle end 114 is configured to connect to the body section 120. The head end 115 is configured to support the rotating disk 112. The transmission housing 111 may include one or more (as illustrated, two) circumferential ridges 116, which may act as a grip to assist in the attachment and removal of the bristle head section 110 to/from the body section 120 by a user of the toothbrush 100. The transmission housing 111 defines an internal cavity, which may include a mechanism adapted to receive a shaft associated with the body section 120 and convert motion of the shaft into an oscillation of the rotating disk 112.

The body section 120 comprises a housing 121 and a charging section 122. The charging section 122 may be an induction charger, a USB charging port, a power adapter socket, and the like, and includes or is operatively connected to a rechargeable battery. One or more of a power switch 123 and an indicator section 124 may be disposed on the housing 121. The power switch 123 may be a push-button type, a slide-actuator type, a rocker type, a touch-sensing type, and the like. When actuated, the power switch 123 causes power to be supplied from the charging section 122 to a motor disposed within the housing 121 to generate motion, such as oscillatory motion. This motion may then be translated to the bristle head section 110, for example by the shaft described above. The indicator section 124 may include one or more indicators, such as LEDs, an LCD display, and/or an audio device. Thus, the indicator section 124 may provide audio, visual, or haptic feedback to the user of the toothbrush 100. This feedback may be indicative of a status of the rechargeable battery (charging / low / full), an activation state of the toothbrush 100 (on / off), and the like.

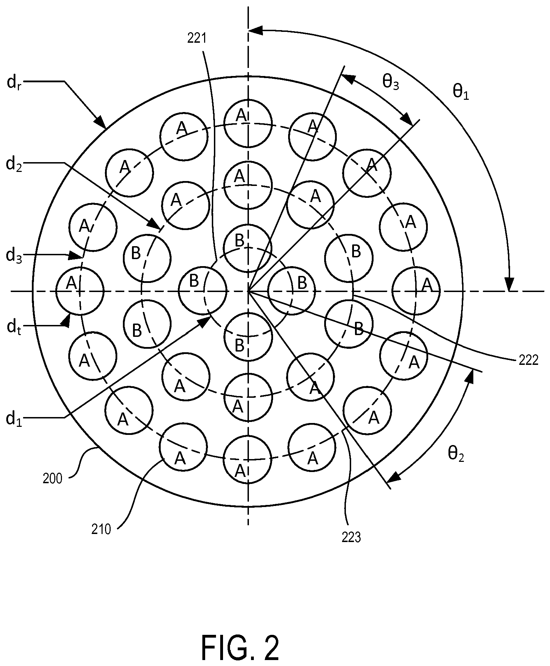

FIG. 2 illustrates a rotating disk 200 (which may be, for example, the rotating disk 112) in detail in a top plan view thereof. The rotating disk 200 includes a plurality of bristle tufts 210 disposed in an upper surface thereof, which are categorized as either A-type tufts or B-type tufts based on their location along the upper surface. Each bristle tuft 210 includes a plurality (for example, 12 to 42) of bristles (which may be, for example, the bristles 113) of a uniform dimension, but the dimension depends on whether the bristle tuft 210 is an A-type tuft or a B-type tuft. Each bristle tuft 210 is attached to the rotating disk 200 at an intermediate point between the ends of the bristles. In this manner, each end of the bristle extends from the upper surface in a manner that will be described in more detail below. A-type tufts may be the same as or different from B-type tufts. For example, A-type tufts may consist of tapered bristles (which will be described in more detail below) and B-type tufts may consist of non-tapered bristles; alternatively, both A- and B-type tufts may consist of tapered bristles or of non-tapered bristles.

As illustrated in FIG. 2, the bristle tufts 210 are arranged along three concentric virtual circles 221, 222, 223, having respective diameters d₁, d₂, d₃. The rotating disk 200 has a diameter dᵣ, and each bristle tuft 210 of the rotating disk 200 has a diameter dₜ. Along each virtual circle 221-223, bristle tufts 210 are disposed at regular angular intervals. As particularly illustrated, four bristle tufts 210 exist along the inner virtual circle such that they are disposed at intervals θ₁ of 90°; ten bristle tufts 210 exist along the intermediate virtual circle such that they are disposed at intervals θ₂ of 36°; and sixteen bristle tufts 210 exist along the outer virtual circle such that they are disposed at intervals θ₃ of 22.5°. Generally, the rotating disk 200 is configured to oscillate to a predetermined maximum rotational displacement (for example, 36°) in either direction.

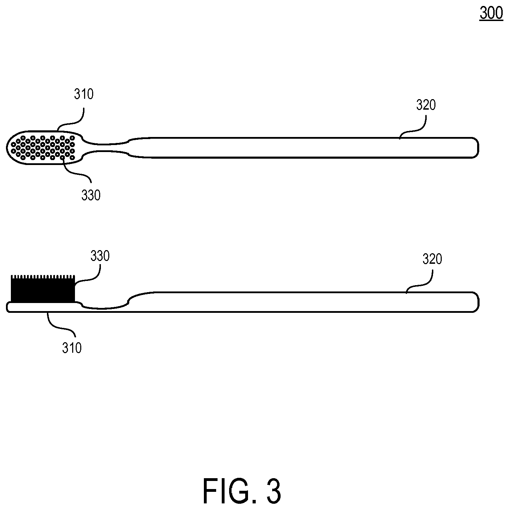

FIG. 3 illustrates another exemplary toothbrush 300 according to various aspects of the present disclosure. More particularly, the toothbrush 300 is a manual toothbrush. The toothbrush 300 includes a bristle head 310 and a handle 320 that are of a unitary construction. A plurality of bristle tufts 330, each including a plurality of bristles, are disposed in the bristle head 310. The handle 320 may include surface features such as a rubberized grip formed therein or thereon.

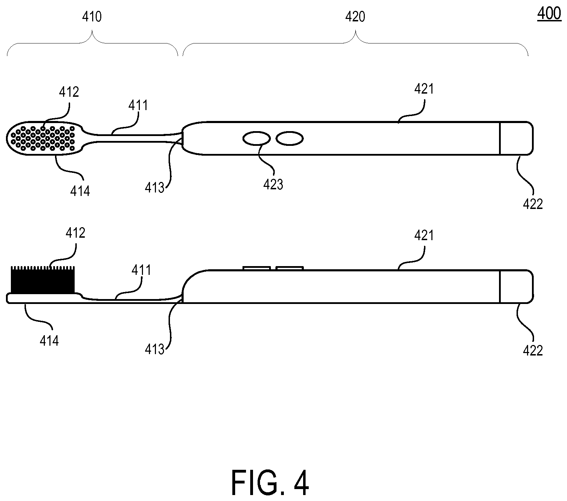

FIG. 4 illustrates another exemplary toothbrush 400 according to various aspects of the present disclosure. More particularly, the toothbrush 400 is a vibratory toothbrush. The toothbrush 400 includes a bristle head section 410 and a handle section 420 that are removably attached to one another. The bristle head section 410 comprises a bristle carrier 411 and a plurality of bristle tufts 412. The bristle carrier 411 extends longitudinally from a handle end 413 to a head end 414. The handle end 413 is configured to connect to the handle section 420. The plurality of bristle tufts 412 are disposed in the head end 414.

The handle section 420 comprises a housing 421 and a cap 422. The cap 422 is removable so that a battery may be placed in or removed from the interior of the housing 421. A waterproof seal (not illustrated) may be disposed between the cap 422 and the housing 421 to prevent the entry of water. A power switch 423 is disposed on the housing 421. The power switch 423 may be a push-button type, a slide-actuator type, a rocker type, a touch-sensing type, and the like. When actuated, the power switch 423 causes power to be supplied from the battery to a motor disposed within the housing 421 to generate motion, such as vibratory motion, circular motion, rotational oscillating motion, longitudinal oscillating motion, lateral oscillating motion, and the like, including combinations thereof.

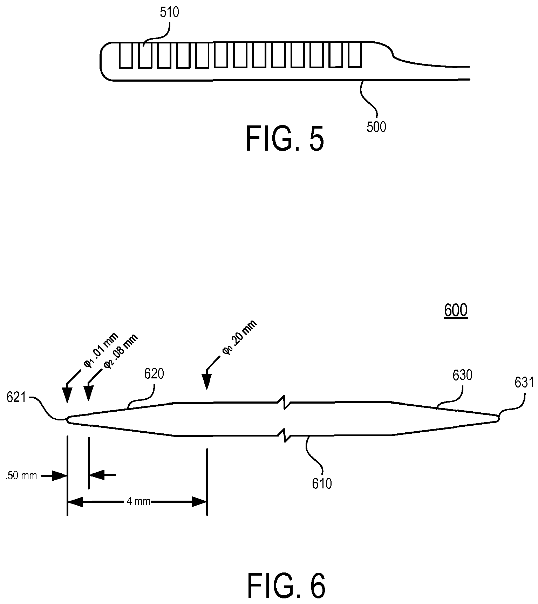

FIG. 5 illustrates a partial cross-sectional view of a tufting arrangement for use with each of the exemplary toothbrushes described above, so as to illustrate how the various bristle tufts are attached. Specifically, FIG. 5 illustrates a bristle carrier 500 such as the bristle head 310 of the toothbrush 300 or the head end 414 of the toothbrush 400. However, the bristle tufts 113 of the toothbrush 100 may be attached to the rotating disk 112 in a manner that is the same as or similar to the manner illustrated in FIG. 5 and described here. The bristle carrier 500 includes a plurality of tuft holes 510 arranged therein. Each tuft hole 510 is sized to receive a bristle tuft.

FIGS. 6-7 illustrate the bristles that comprise the bristle tufts and the manner in which they may be disposed in the tuft holes 510 of the bristle carrier 500. FIG. 6 illustrates an exemplary bristle 600, a plurality of which constitute a bristle tuft. The bristle 600 includes a bristle shaft 610 which extends between a first end 620 and a second end 630. The bristle 600 has a "double-tapered" configuration; that is, the first end 620 is tapered to a first tip 621 and the second end 630 is tapered to a second tip 631. The bristle 600 is preferably formed of polybutylene terephthalate (PBT) or a similar material. The first end 620 and the second end 630 are shaped to produce the first tip 621 and the second tip 631, respectively, by subjecting the bristle 600 to a chemical or mechanical process.

In the chemical process, the bristle 600 is partially immersed in a chemical solution that etches away selected material of the bristle 600. For example, the bristle 600 may be slowly immersed in a solution of a PBT-etching chemical and then slowly removed from the solution. In this manner, the amount of exposure, and thus the amount of etching and material removed, of the bristle 600 is greater at points nearer the first tip 621 and the second tip 631 in a controlled manner. The chemical process may occur in a single-dip or double-dip manner. In the single-dip manner, the bristle 600 may be folded at the longitudinal center of the bristle shaft 610 and then loaded into a carrier. After loading, the folded bristle 600 is immersed in the chemical solution so that the first end 620 and the second 630 are simultaneously etched. In the double-dip manner, the bristle 600 may be loaded into a carrier without folding. After loading, the bristle 600 is immersed in the chemical solution so that only one of the first end 620 and the second end 630 is etched. The bristle 600 is then removed from the chemical solution and rotated, either by rotating the carrier or by unloading, rotating, and reloading the bristle 600 itself. After rotation, the bristle 600 is again immersed in the chemical solution so that the other of the first end 620 and the second end 630 is etched.

In the mechanical process, the bristle 600 is worked with a tool that physically removes a portion of the material of the bristle 600. For example, the bristle may be held and worked with a blade or with a grinding wheel to produce the tapered shape of the first end 620 and the second end 630. The mechanical process may be used as an alternative to the chemical process, or the tapering of the bristles may be created by a combination of chemical and manufacturing processes.

As a result of either the chemical process, the mechanical process, or a combination of processes, the bristle 600 is produced with the tapered first tip 621 and the tapered second tip 631. As illustrated in FIG. 6, an exemplary profile of the bristle 600 is such that the diameter (φ₁) of the first end 620 is 0.01 mm or less at the first tip 621, increasing to a diameter (φ₂) of 0.08 mm or less at a distance of 0.50 mm from the first tip 621, and eventually increasing to a diameter (φ₀) of 0.20 mm or less, which represents the diameter of the bristle shaft 610, at a distance of 4 mm from the first tip 621. The second end 630 is produced with the same or similar dimensions. The diameter of the bristle 600 may increase steadily from the first tip 621 to a midpoint of the bristle and from the second tip 631 to the midpoint of the bristle, such that a total length of each tapered portion may be 4 mm or greater. The increase in diameter may be linear or non-linear, so long as the diameter does not decrease moving from the respective first and second tips 621, 631, to the midpoint of the bristle. While FIG. 6 illustrates particular dimensions, the present disclosure is not so limited. For example, while FIG. 6 illustrates the bristle 600 with a diameter of 0.20 mm (8 mil) and a taper length of 4 mm, the present disclosure may also be implemented with other bristle diameters such as from 0.10-0.22 mm (4-9 mil) and other taper lengths. The above dimensions may be subject to a manufacturing tolerance of, for example, ±10%.

In some aspects of the present disclosure, the dimensions of the bristle 600 may be presented relative to the diameter of the bristle shaft 610, rather than as absolute values. In such a description, the diameter (φ₁) of the first end 620 at the first tip 621 may be represented as φ₁ ≤ 0.05φ₀, increasing to a diameter (φ₂) at a distance of 0.50 mm from the first tip 621 represented as φ₁ ≤ 0.40φ₀, and eventually increasing to the diameter φ₀ by a distance of 4 mm from the first tip 621.

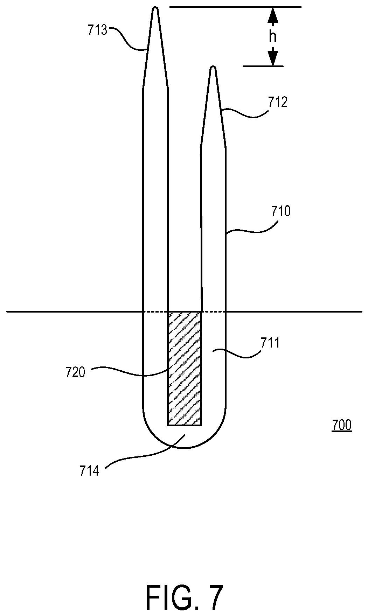

FIG. 7 illustrates an exemplary tufting arrangement of a bristle, where the bristle is constructed as described for the bristle 600. Specifically, FIG. 7 illustrates a bristle carrier 700, to which a bristle 710 has been attached using a fastener 720. The fastener 720 may be, for example, a staple. While FIG. 7 illustrates only a single bristle 710 for clarity, in practice a plurality (for example, 12-42) of bristles 710 are attached to the bristle carrier 700 with a single fastener 720. As illustrated, the bristle 710 includes a bristle shaft 711 extending between a first end 712 and a second end 713. To fasten the bristle 710 within a tufting hole (not shown) of the bristle carrier 700, the fastener 720 is positioned at an attachment point 714 along the bristle shaft 711 that is offset from the midpoint of the bristle shaft 711, and the bristle 710 is secured by the fastener 720 within the tufting hole.

As fastener 720 extends into the tufting hole, the fastener 720 and the bristle carrier 700 act on the bristle 710 at the attachment point 714 to cause the first end 712 and the second end 713 to extend in a direction substantially perpendicular to the surface of the bristle carrier 700. Each of the first end 712 and the second end 713 extend from the surface of the bristle carrier 700 by a distance that may be related to the type of toothbrush and the size of the toothbrush head in which the bristle 710 resides. For example, the distance may be determined according to the expression d_{bt} = α × dₕ. In this expression, d_{bt} refers to the "bristle tip distance," which is the distance between the upper surface of bristle carrier 700 and the taller end of bristle 710 (as illustrated in FIG. 7, second end 713); dₕ refers to the "head dimension," which is the largest diameter of the bristle head (for example, the head length for a rectangular or elliptical brush head or the head diameter for a circular brush head); and α is a proportionality factor having a value between 0.5 and 0.8, inclusive. Preferably, α has a value between 0.6 and 0.7, inclusive. The above dimensions may be subject to a manufacturing tolerance of, for example, ±1 mm.

In any event, because the attachment point 714 is not located at the midpoint of the bristle shaft 711, a height difference h exists between the first end 712 and the second end 713. This tufting is referred to as a "J-hook" configuration due to the presence of the height difference h. The ability of a bristle to access difficult-to-reach areas is improved by the particular height difference h. This ability may be measured by: subgingival access efficacy (SAE), which measures the ability to access subgingival areas such as those below the gingival margin; interproximal access efficacy (IAE), which measures the ability to access interproximal areas such as those between teeth; or a combination of SAE and IAE.

The height difference h is greater than or equal to 2.25 mm or, preferably, greater than or equal to 2.5 mm. If the height difference h is smaller than this threshold (for example, 2 mm or smaller), various cleaning attributes of the bristle 710, such as access in difficult-to-reach areas, are diminished. If the height difference h is greater than or equal to this threshold, however, a toothbrush incorporating the bristles and tufting arrangement exhibits superior SAE, IAE, or both.

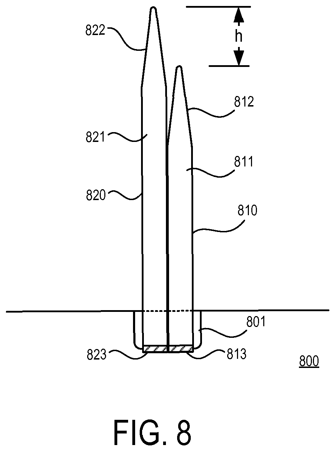

While FIGS. 6-7 illustrate a double-ended bristle, the present disclosure is not so limited. In some aspects, a toothbrush in accordance with the present disclosure may include a plurality of single-ended bristles. FIG. 8 illustrates an exemplary tufting arrangement in accordance with such an aspect, also referred to as an "anchorless" toothbrush. Specifically, FIG. 8 illustrates a bristle carrier 800 including a tufting hole 801, to which a pair of bristles 810, 820 have been attached. While FIG. 8 illustrates only a pair of bristles 810, 820 for clarity, in practice a plurality (which, depending on the type of anchorless toothbrush, may be any number of bristles 810, 820 per tuft) of pairs of bristles 810, 820 are attached to the bristle carrier 800. As illustrated, the bristle 810 includes a bristle shaft 811 extending between a distal end 812 and a proximal end 813, and the bristle 820 includes a bristle shaft 821 extending between a distal end 822 and a proximal end 823. The proximal ends 813, 823 form fastening points with the inner surface of the tufting hole 801, and may be fastened therein by, for example, an adhesive. In some aspects of the present disclosure, heat may be applied to the proximal ends 813, 823 and the bristle carrier 800, thereby to partially melt the proximal ends 813, 823 together with the bristle carrier 800. When heat is removed, the materials will resolidify, thus fastening the bristles 810, 820 to the bristle carrier 800.

The distal ends 812, 822 extend in a direction substantially perpendicular to the surface of the bristle carrier 800. Each of the distal end 812 and the distal end 822 extend from the surface of the bristle carrier 800 by a respective distance that may be related to the type of toothbrush and the size of the toothbrush head in which the bristles 810, 820 reside, in a manner similar to that described above with reference to FIG. 7. As illustrated in FIG. 8, the bristle 810 is shorter than the bristle 820, such that a height difference h exists between the distal end 812 and the distal end 822. As above, this tufting is referred to as a "J-hook" configuration due to the presence of the height difference h. The ability of a bristle to access difficult-to-reach areas is improved by the particular height difference h. This ability may be measured by SAE, IAE, or a combination of SAE and IAE. In some aspects of the present disclosure, the number of bristles 810 is the same as the number of bristles 820; however, the present disclosure is not so limited and the number of bristles 810 may be greater than or less than the number of bristles 820.

The height difference h is greater than or equal to 2.25 mm or, preferably, greater than or equal to 2.5 mm. If the height difference h is smaller than this threshold (for example, 2 mm or smaller), various cleaning attributes of the bristles 810, 820, such as access in difficult-to-reach areas, are diminished. If the height difference h is greater than or equal to this threshold, however, a toothbrush incorporating the bristles and tufting arrangement exhibits superior SAE, IAE, or both.

While the above description provides various examples of a toothbrush, the present disclosure is not so limited. In accordance with the present disclosure, an anchorless toothbrush may, for example, be formed by fusing the proximal ends by melting before tufting into a pre-molded head, by inserting bristles into a pre-molded head plate and then assembly of the head plate with the remainder of the toothbrush, by molding the head plate (or head and handle) around the fused bristles, and the like. Furthermore, in accordance with the present disclosure, an anchorless or anchored toothbrush may be formed using a number of processes including but not limited to melting and fusing proximal ends, molding of head components (e.g., the head plate, the remainder of the head, and/or the handle), and assembly of molded parts. These processes are not necessarily performed in the above order, and in some toothbrushes one or more of the above processes may not be performed.

In either the tufting arrangement of FIG. 7 or the tufting arrangement of FIG. 8, the shaping processes may occur either before or after the bristles have been attached to the bristle carrier.

## Claims

1. A toothbrush (100, 300, 400), comprising:
a handle (120, 320, 420);
a head (110, 310, 410) connected to the handle; and
a plurality of bristles (113, 330, 412, 600, 710, 810), respective ones of the plurality of bristles including:
a first end (620) having a tapered first tip (621),
a second end (630) having a tapered second tip (631), and
a substantially cylindrical shaft (610) extending between the first end and the second end,
wherein respective ones of the plurality of bristles (113, 330, 412, 600, 710, 810) are fastened to the head by a fastener (720) at a fastening point along the shaft (610), the fastening point being located nearer to the second end (630) than to the first end (620) such that the first end extends from a surface of the head to a first height and the second end extends from the surface of the head to a second height, and
**characterized in that** a difference between the first height and the second height is greater than or equal to 2.25 mm.

2. The toothbrush according to claim 1, wherein the difference between the first height and the second height is greater than or equal to 2.5 mm.

3. The toothbrush according to claim 1 or claim 2, wherein respective ones of the plurality of bristles (113, 330, 412, 600, 710, 810) have a base diameter at the fastening point, and the base diameter is between 4 mil (0.1016mm) and 9 mil (0.2286mm), inclusive.

4. The toothbrush according to any preceding claim, wherein respective ones of the plurality of bristles (113, 330, 412, 600, 710, 810) have a first diameter measured at the first tip (621), and the first diameter is less than or equal to 0.05 times the base diameter.

5. The toothbrush according to any preceding claim, wherein respective ones of the plurality of bristles (113, 330, 412, 600, 710, 810)have a second diameter measured at a distance of 0.5 mm from the first tip (621), and the second diameter is less than or equal to 0.40 times the base diameter.

6. The toothbrush according to any preceding claim, wherein respective ones of the plurality of bristles (113, 330, 412, 600, 710, 810) have a third diameter measured at the second tip (631), and the third diameter is less than or equal to 0.05 times the base diameter.

7. The toothbrush according to any preceding claim, wherein respective ones of the plurality of bristles (113, 330, 412, 600, 710, 810) have a fourth diameter measured at a distance of 0.5 mm from the second tip (631), and the fourth diameter is less than or equal to 0.40 times the base diameter.

8. The toothbrush according to any preceding claim, wherein the first tip (621) and the second tip (631) are formed by a chemical process, a mechanical process, or a combination of the chemical process and the mechanical process.

9. The toothbrush according to any preceding claim, wherein the fastener (720) is a staple.

10. A method of manufacturing a toothbrush (100, 300, 400), comprising:
providing a plurality of unshaped bristles (113, 330, 412, 600, 710, 810), respective ones of the plurality of unshaped bristles having a first end (620), a second end (630), and a substantially cylindrical shaft (610) between the first end and the second end;
attaching respective ones of the plurality of unshaped bristles to a head (110, 310, 410) of the toothbrush using a fastener (720) at a fastening point along the shaft, the fastening point being located nearer to the second end (630) than to the first end (620) such that the first end extends from a surface of the head to a first height and the second end extends from the surface of the head to a second height; and
shaping the first end (620) of the respective ones of the plurality of unshaped bristles to provide a tapered first tip (621) and the second end (630) of the respective ones of the plurality of unshaped bristles to provide a tapered second tip (631), thereby to create a plurality of shaped bristles,
wherein a difference between the first height and the second height is greater than or equal to 2.25 mm.

11. The method according to claim 10, wherein the difference between the first height and the second height is greater than or equal to 2.5 mm.

12. The method according to claim 10 or claim 11, wherein respective ones of the plurality of shaped bristles (113, 330, 412, 600, 710, 810) have a base diameter at the fastening point, and the base diameter is between 4 mil (0.1016mm) and 9 mil (0.2286mm), inclusive.

13. The method according to claim 12, wherein:
respective ones of the plurality of shaped bristles (113, 330, 412, 600, 710, 810) have a first diameter measured at the first tip (621), and the first diameter is less than or equal to 0.05 times the base diameter, and /or
respective ones of the plurality of shaped bristles (113, 330, 412, 600, 710, 810) have a second diameter measured at a distance of 0.5 mm from the first tip (621), and the second diameter is less than or equal to 0.40 times the base diameter, and/or
respective ones of the plurality of shaped bristles (113, 330, 412, 600, 710, 810) have a third diameter measured at the second tip (631), and the third diameter is less than or equal to 0.05 times the base diameter, and/or
respective ones of the plurality of shaped bristles (113, 330, 412, 600, 710, 810) have a fourth diameter measured at a distance of 0.5 mm from the second tip (631), and the fourth diameter is less than or equal to 0.40 times the base diameter.

14. The method according to any of claims 10 to 13, wherein the shaping includes performing a chemical process, a mechanical process, or a combination of the chemical process and the mechanical process.

15. The method according to any of claims 10 to 14, wherein the fastener is a staple (720).

## Patentansprüche

1. Zahnbürste (100, 300, 400), umfassend:
einen Griff (120, 320, 420);
einen mit dem Griff verbundenen Kopf (110, 310, 410); und
eine Vielzahl von Borsten (113, 330, 412, 600, 710, 810), wobei jeweilige Borsten der Vielzahl von Borsten Folgendes einschließen:
ein erstes Ende (620) mit einer verjüngten ersten Spitze (621),
ein zweites Ende (630) mit einer verjüngten zweiten Spitze (631) und
einen im Wesentlichen zylindrischen Schaft (610), der sich zwischen dem ersten Ende und dem zweiten Ende erstreckt,
wobei jeweilige Borsten der Vielzahl von Borsten (113, 330, 412, 600, 710, 810) mittels eines Befestigungselements (720) an einem Befestigungspunkt entlang des Schafts (610) an dem Kopf befestigt sind, wobei sich der Befestigungspunkt näher an dem zweiten Ende (630) als an dem ersten Ende (620) befindet, sodass sich das erste Ende von einer Oberfläche des Kopfes zu einer ersten Höhe erstreckt und sich das zweite Ende von der Oberfläche des Kopfes zu einer zweiten Höhe erstreckt, und
**dadurch gekennzeichnet, dass** die Differenz zwischen der ersten Höhe und der zweiten Höhe größer oder gleich 2,25 mm ist.

2. Zahnbürste nach Anspruch 1, wobei die Differenz zwischen der ersten Höhe und der zweiten Höhe größer oder gleich 2,5 mm ist.

3. Zahnbürste nach Anspruch 1 oder Anspruch 2, wobei jeweilige Borsten (113, 330, 412, 600, 710, 810) der Vielzahl von Borsten einen Basisdurchmesser an dem Befestigungspunkt aufweisen und der Basisdurchmesser zwischen einschließlich 4 mil (0,1016 mm) und 9 mil (0,2286 mm) liegt.

4. Zahnbürste nach einem der vorstehenden Ansprüche, wobei jeweilige Borsten der Vielzahl von Borsten (113, 330, 412, 600, 710, 810) einen an der ersten Spitze (621) gemessenen ersten Durchmesser aufweisen und der erste Durchmesser kleiner oder gleich dem 0,05-Fachen des Basisdurchmessers ist.

5. Zahnbürste nach einem der vorstehenden Ansprüche, wobei jeweilige Borsten der Vielzahl von Borsten (113, 330, 412, 600, 710, 810) einen in einem Abstand von 0,5 mm von der ersten Spitze (621) gemessenen zweiten Durchmesser aufweisen und der zweite Durchmesser kleiner oder gleich dem 0,40-Fachen des Basisdurchmessers ist.

6. Zahnbürste nach einem der vorstehenden Ansprüche, wobei jeweilige Borsten der Vielzahl von Borsten (113, 330, 412, 600, 710, 810) einen an der zweiten Spitze (631) gemessenen dritten Durchmesser aufweisen und der dritte Durchmesser kleiner oder gleich dem 0,05-Fachen des Basisdurchmessers ist.

7. Zahnbürste nach einem der vorstehenden Ansprüche, wobei jeweilige Borsten der Vielzahl von Borsten (113, 330, 412, 600, 710, 810) einen in einem Abstand von 0,5 mm von der zweiten Spitze (631) gemessenen vierten Durchmesser aufweisen und der vierte Durchmesser kleiner oder gleich dem 0,40-Fachen des Basisdurchmessers ist.

8. Zahnbürste nach einem der vorstehenden Ansprüche, wobei die erste Spitze (621) und die zweite Spitze (631) durch einen chemischen Prozess, einen mechanischen Prozess oder eine Kombination aus dem chemischen und dem mechanischen Prozess ausgebildet sind.

9. Zahnbürste nach einem der vorstehenden Ansprüche, wobei das Befestigungselement (720) eine Klammer ist.

10. Verfahren zur Herstellung einer Zahnbürste (100, 300, 400), umfassend:
Bereitstellen einer Vielzahl von ungeformten Borsten (113, 330, 412, 600, 710, 810), wobei jeweilige Borsten der Vielzahl von ungeformten Borsten ein erstes Ende (620), ein zweites Ende (630) und einen im Wesentlichen zylindrischen Schaft (610) zwischen dem ersten Ende und dem zweiten Ende aufweisen;
Befestigen jeweiliger Borsten der Vielzahl von ungeformten Borsten an einem Kopf (110, 310, 410) der Zahnbürste unter Verwendung eines Befestigungselements (720) an einem Befestigungspunkt entlang des Schafts, wobei sich der Befestigungspunkt näher an dem zweiten Ende (630) als an dem ersten Ende (620) befindet, sodass sich das erste Ende von einer Oberfläche des Kopfes zu einer ersten Höhe erstreckt und sich das zweite Ende von der Oberfläche des Kopfes zu einer zweiten Höhe erstreckt; und
Formen des ersten Endes (620) der jeweiligen Borsten der Vielzahl von ungeformten Borsten, um eine verjüngte erste Spitze (621) bereitzustellen, und des zweiten Endes (630) der jeweiligen Borsten der Vielzahl von ungeformten Borsten, um eine verjüngte zweite Spitze (631) bereitzustellen, um dadurch eine Vielzahl von geformten Borsten zu erzeugen,
wobei die Differenz zwischen der ersten Höhe und der zweiten Höhe größer oder gleich 2,25 mm ist.

11. Verfahren nach Anspruch 10, wobei die Differenz zwischen der ersten Höhe und der zweiten Höhe größer oder gleich 2,5 mm ist.

12. Verfahren nach Anspruch 10 oder Anspruch 11, wobei jeweilige Borsten (113, 330, 412, 600, 710, 810) der Vielzahl von geformten Borsten einen Basisdurchmesser an dem Befestigungspunkt aufweisen und der Basisdurchmesser zwischen einschließlich 4 mil (0,1016 mm) und 9 mil (0,2286 mm) liegt.

13. Verfahren nach Anspruch 12, wobei:
jeweilige Borsten der Vielzahl von geformten Borsten (113, 330, 412, 600, 710, 810) einen an der ersten Spitze (621) gemessenen ersten Durchmesser aufweisen und der erste Durchmesser kleiner oder gleich dem 0,05-Fachen des Basisdurchmessers ist, und/oder
jeweilige Borsten der Vielzahl von geformten Borsten (113, 330, 412, 600, 710, 810) einen in einem Abstand von 0,5 mm von der ersten Spitze (621) gemessenen zweiten Durchmesser aufweisen und der zweite Durchmesser kleiner oder gleich dem 0,40-Fachen des Basisdurchmessers ist, und/oder
jeweilige Borsten der Vielzahl von geformten Borsten (113, 330, 412, 600, 710, 810) einen an der zweiten Spitze (631) gemessenen dritten Durchmesser aufweisen und der dritte Durchmesser kleiner oder gleich dem 0,05-Fachen des Basisdurchmessers ist, und/oder
jeweilige Borsten der Vielzahl von geformten Borsten (113, 330, 412, 600, 710, 810) einen in einem Abstand von 0,5 mm von der zweiten Spitze (631) gemessenen vierten Durchmesser aufweisen und der vierte Durchmesser kleiner oder gleich dem 0,40-Fachen des Basisdurchmessers ist.

14. Verfahren nach einem der Ansprüche 10 bis 13, wobei das Formen das Durchführen eines chemischen Prozesses, eines mechanischen Prozesses oder einer Kombination aus dem chemischen und dem mechanischen Prozess einschließt.

15. Verfahren nach einem der Ansprüche 10 bis 14, wobei das Befestigungselement eine Klammer (720) ist.

## Revendications

1. Brosse à dents (100, 300, 400), comprenant :
un manche (120, 320, 420) ;
une tête (110, 310, 410) reliée au manche ; et
une pluralité de poils (113, 330, 412, 600, 710, 810), des poils respectifs de la pluralité de poils incluant :
une première extrémité (620) présentant une première pointe effilée (621),
une seconde extrémité (630) présentant une seconde pointe effilée (631), et
une tige sensiblement cylindrique (610) s'étendant entre la première extrémité et la seconde extrémité,
dans laquelle des poils respectifs de la pluralité de poils (113, 330, 412, 600, 710, 810) sont fixés à la tête par un élément de fixation (720) en un point de fixation situé le long de la tige (610), le point de fixation étant situé plus près de la seconde extrémité (630) que de la première extrémité (620), de sorte que la première extrémité s'étende d'une surface de la tête à une première hauteur et que la seconde extrémité s'étende de la surface de la tête à une seconde hauteur, et
**caractérisée en ce qu'**une différence entre la première hauteur et la seconde hauteur est supérieure ou égale à 2,25 mm.

2. Brosse à dents selon la revendication 1, dans laquelle la différence entre la première hauteur et la seconde hauteur est supérieure ou égale à 2,5 mm.

3. Brosse à dents selon la revendication 1 ou la revendication 2, dans laquelle des poils respectifs de la pluralité de poils (113, 330, 412, 600, 710, 810) présentent un diamètre de base au point de fixation, et le diamètre de base est compris entre 4 mil (0,1016 mm) et 9 mil (0,2286 mm), inclus.

4. Brosse à dents selon une quelconque revendication précédente, dans laquelle des poils respectifs de la pluralité de poils (113, 330, 412, 600, 710, 810) présentent un premier diamètre mesuré au niveau de la première pointe (621), et le premier diamètre est inférieur ou égal à 0,05 fois le diamètre de la base.

5. Brosse à dents selon une quelconque revendication précédente, dans laquelle des poils respectifs de la pluralité de poils (113, 330, 412, 600, 710, 810) présentent un deuxième diamètre mesuré à une distance de 0,5 mm de la première pointe (621), et le deuxième diamètre est inférieur ou égal à 0,40 fois le diamètre de base.

6. Brosse à dents selon une quelconque revendication précédente, dans laquelle des poils respectifs de la pluralité de poils (113, 330, 412, 600, 710, 810) présentent un troisième diamètre mesuré au niveau de la seconde extrémité (631), et le troisième diamètre est inférieur ou égal à 0,05 fois le diamètre de base.

7. Brosse à dents selon une quelconque revendication précédente, dans laquelle des poils respectifs de la pluralité de poils (113, 330, 412, 600, 710, 810) présentent un quatrième diamètre mesuré à une distance de 0,5 mm de la seconde pointe (631), et le quatrième diamètre est inférieur ou égal à 0,40 fois le diamètre de base.

8. Brosse à dents selon une quelconque revendication précédente, dans laquelle la première pointe (621) et la seconde pointe (631) sont formées par un processus chimique, un processus mécanique ou une combinaison du processus chimique et du processus mécanique.

9. Brosse à dents selon une quelconque revendication précédente, dans laquelle l'élément de fixation (720) est une agrafe.

10. Procédé de fabrication d'une brosse à dents (100, 300, 400), comprenant :
la fourniture d'une pluralité de poils non façonnés (113, 330, 412, 600, 710, 810), des poils respectifs de la pluralité de poils non façonnés présentant une première extrémité (620), une seconde extrémité (630) et une tige sensiblement cylindrique (610) entre la première extrémité et la seconde extrémité ;
la fixation des poils respectifs de la pluralité de poils non façonnés à une tête (110, 310, 410) de la brosse à dents à l'aide d'un élément de fixation (720) en un point de fixation situé le long de la tige, le point de fixation étant situé plus près de la seconde extrémité (630) que de la première extrémité (620), de sorte que la première extrémité s'étende d'une surface de la tête à une première hauteur et que la seconde extrémité s'étende de la surface de la tête à une seconde hauteur ; et
le façonnage de la première extrémité (620) des poils respectifs de la pluralité de poils non façonnés afin d'obtenir une première pointe effilée (621) et de la seconde extrémité (630) des poils respectifs de la pluralité de poils non façonnés afin d'obtenir une seconde pointe effilée (631), créant ainsi une pluralité de poils façonnés,
dans lequel une différence entre la première hauteur et la seconde hauteur est supérieure ou égale à 2,25 mm.

11. Procédé selon la revendication 10, dans lequel la différence entre la première hauteur et la seconde hauteur est supérieure ou égale à 2,5 mm.

12. Procédé selon la revendication 10 ou la revendication 11, dans lequel des poils respectifs de la pluralité de poils façonnés (113, 330, 412, 600, 710, 810) présentent un diamètre de base au point de fixation, et le diamètre de base est compris entre 4 mil (0,1016 mm) et 9 mil (0,2286 mm), inclus.

13. Procédé selon la revendication 12, dans lequel :
des poils respectifs de la pluralité de poils façonnés (113, 330, 412, 600, 710, 810) présentent un premier diamètre mesuré au niveau de la première pointe (621), et le premier diamètre est inférieur ou égal à 0,05 fois le diamètre de la base, et/ou
des poils respectifs de la pluralité de poils façonnés (113, 330, 412, 600, 710, 810) présentent un deuxième diamètre mesuré à une distance de 0,5 mm de la première pointe (621), et le deuxième diamètre est inférieur ou égal à 0,40 fois le diamètre de base, et/ou
des poils respectifs de la pluralité de poils façonnés (113, 330, 412, 600, 710, 810) présentent un troisième diamètre mesuré au niveau de la seconde pointe (631), et le troisième diamètre est inférieur ou égal à 0,05 fois le diamètre de base, et/ou
des poils respectifs de la pluralité de poils façonnés (113, 330, 412, 600, 710, 810) présentent un quatrième diamètre mesuré à une distance de 0,5 mm de la seconde pointe (631), et le quatrième diamètre est inférieur ou égal à 0,40 fois le diamètre de base.

14. Procédé selon l'une quelconque des revendications 10 à 13, dans lequel le façonnage inclut la mise en œuvre d'un processus chimique, d'un processus mécanique ou d'une combinaison du processus chimique et du processus mécanique.

15. Procédé selon l'une quelconque des revendications 10 à 14, dans lequel l'élément de fixation est une agrafe (720).
